# EUROPEAN PATENT APPLICATION

(11) **EP 4 752 068 A1**
(43) Date of publication of application: **03.06.2026**
(21) Application number: 25218043.5
(22) Date of filing: 24.11.2025
(51) Int. Cl.: B64D 37/32

(54) **AN INERTING SYSTEM**

(30) Priority: 28.11.2024 GB 202417515
(71) Applicant: Airbus Operations Limited, Bristol BS34 7PA (GB)
(72) Inventor: EDWARDS, Henry, Bristol, BS34 7PA (GB)
(74) Representative: Abel & Imray LLP

(57) **Abstract**

An inerting system (22) has an inerting apparatus (44) which receives an inlet air flow and separates it into nitrogen enriched air (NEA) and oxygen enriched air (OEA). The inerting system also has an oxygen concentration sensor (46) and a controller (48) connected to the oxygen concentration sensor (46). The controller (48) adjusts operation of the inerting system (22) during use, based at least in part on feedback received from the oxygen concentration sensor (46).

## Description

### BACKGROUND OF THE INVENTION

The present disclosure relates to the field of inerting systems. It relates particularly, but not exclusively, to inerting systems which can be used to fill the ullage of an aircraft fuel tank with nitrogen enriched air as a fire safety precaution.

Owing to airworthiness requirements, most commercial aircraft require the use of fuel tank inerting systems among a suite of other measures to prevent aircraft fuel tank fires or explosions. The primary purpose of such inerting systems (also referred to as inert gas generation systems) is to reduce the oxygen (O2) concentration within the aircraft fuel tank ullage, and hence the ullage flammability, thereby preventing the ability of the ullage to combust. State of the art systems comprise the use of one or more Air Separation Modules (ASMs) to separate bleed air into nitrogen enriched air (NEA), sometimes called oxygen depleted air, and oxygen enriched air (OEA). The OEA is exhausted overboard from the aircraft whilst the NEA is fed in a controlled manner at predetermined rates into the ullage above the fuel in the aircraft's fuel tank or tanks such that the O2 concentration of the ullage is kept below an upper limit (for instance 12%) during most operating conditions of the aircraft.

In conventional systems bleed air, which is high temperature and pressure air bled from an engine or from a separate compressor fed by a ram air channel, is filtered and cooled before being inputted into the ASM(s). Cooling and filtering of the bleed air is important because the ASM contains a membrane, often in the form of a set of hollow fibres, over which the input air passes. The membrane can be clogged if the input air contains contaminants like dust, and degrades too rapidly if subjected to input air above a certain temperature. The membrane of the/each ASM is permeable to oxygen but not to nitrogen, so as the air passes over the membrane much of the oxygen it contains passes through the membrane while the nitrogen continues along it. This separates the air into the NEA and OEA. The NEA can then be regulated into the ullage, while the OEA can be discarded as mentioned.

An alternative way of producing NEA is through use of a vortex tube. A vortex tube has a vortex chamber into which air is formed into vortex. As the air rotates inside the chamber it produces a hotter stream around the outside and a colder stream towards the middle. Vortex tubes are generally used to provide cooling rather than air separation. However, oxygen, being denser than nitrogen, tends to be thrown out into the outer stream, leaving the inner stream in a nitrogen enriched state. Thus, the cold stream is NEA and the hot stream is OEA.

The inventor of the present application has identified several problems with conventional inerting systems. One problem with conventional systems is that the air separators (i.e. membrane-based ASMs or vortex tubes) are set up to provide a predetermined level of performance. In other words, for a given set of conditions (e.g. flow rate, temperature and oxygen content of the inlet air flow) the flow rate of NEA they produce and the purity of that NEA is fixed. In contrast, the requirements placed upon an inerting system can vary over time, with different NEA flow rates and purity levels being required during different phases of flight of the aircraft, for example.

A related problem is that in conventional systems the purity and flow rate of NEA produced can be dependent on the conditions in which the system operates (i.e. the temperature, flow rate and oxygen concentration of the air that the system receives), which may result in a more conservative design approach being used that ultimately may lead to a more complex design solution.

Some conventional inerting systems use banks of air separators connected in parallel, with different numbers of separators being connected or disconnected according to the requirements of the system at the time. Whilst this does offer some level of control, connecting or disconnecting air separators can lead to an inerting system solution that is relatively heavy, bulky and expensive to manufacture.

A further problem relates to the fact that air separators lose efficacy over time. Even when supplied with filtered and cooled air, the membranes of ASMs slowly degrade. Vortex tubes, on the other hand, can suffer from corrosion or the build-up of dirt in their inlet passages. To ensure that an inerting system is capable of performing in a worst-case scenario, such systems are sized conservatively ("over-sized") so that they can provide NEA at the highest flow rate and/or purity than could be expected during use, even in situations where the performance of their separators is degraded Such a design approach necessitates a higher engine bleed air consumption of the system, which impacts fuel burn negatively and ultimately increases the direct cost of operating the aircraft.

Similarly, oversizing the design of the inerting system also leads to increased maintenance costs due to larger, more numerous serviceable parts such as the membranes, and the increased labour and downtime costs associated with servicing a larger and more complex system..

The present invention seeks to provide an improved or alternative inerting system, aircraft, or method of supplying NEA to an enclosure.

### SUMMARY OF THE INVENTION

According to a first aspect of the present invention there is provided an inerting system comprising:
an inerting apparatus configured to receive an inlet air flow and separate it into nitrogen enriched air (NEA) and oxygen enriched air (OEA);
an inlet flow path configured to convey the inlet air flow, an NEA flow path configured to convey the NEA, and an OEA flow path configured to convey the OEA;
an oxygen concentration sensor positioned in one of said flow paths; and
a controller connected to the oxygen concentration sensor, the controller being configured to adjust operation of the inerting system during use based at least in part on feedback received from the oxygen concentration sensor.

With the controller adjusting operation of the inerting system based at least in part on oxygen concentration, the inerting system may be able to self-adapt during use rather than operating at a fixed level of performance, thereby making the system more versatile and/or efficient. For instance, the inerting system may be able to self-adapt to changes in the conditions in which it is operating (for instance adapting to a reduction in the oxygen concentration of the inlet air flow by performing less thorough separation of the air and/or adapting to an increase in oxygen in the NEA by performing more stringent separation of the air), rather than being unduly affected by such circumstances. As another example, the inerting system may be able to self-adapt to changes in performance due to degradation of an air separator.

Further, this self-adaptation can allow the inerting system to work more efficiently, for instance reducing the over-separation of the air (with the associated reductions service life) and/or the taking in of excessive quantities of air (with the associated reduction in thrust or energy efficiency).

The oxygen concentration sensor may be positioned in the inlet flow path, the NEA flow path or the OEA flow path. For instance, it may be provided in a duct which forms part of said flow path.

The system may comprise two oxygen concentration sensors positioned in different flow paths, each connected to the controller, and the controller may be configured to adjust operation of the inerting system during use based at least in part on feedback received from both oxygen concentration sensors.

The controller may be configured to adjust operation of the inerting system in use in one way based at least in part on feedback from one of the oxygen concentration sensors, and in another way based at least in part on feedback from the other of the oxygen concentration sensors. Instead or as well, the controller may be configured to adjust operation of the inerting system in use based at least in part on combined feedback from both oxygen concentration sensors.

The system may comprise an oxygen concentration sensor positioned in each flow path, each connected to the controller, and the controller may be configured to adjust operation of the inerting system during use based at least in part on feedback received from all three oxygen concentration sensors.

The controller may be configured to adjust operation of the inerting system in one way based at least in part on feedback from two of said oxygen concentration sensors (for example the oxygen concentration sensor in the NEA flow path and the oxygen concentration sensor in the OEA flow path), and in another way based at least in part on feedback from the other of said oxygen concentration sensors (for example the oxygen concentration sensor in the inlet flow path).

The inerting apparatus may comprise a vortex tube.

A vortex tube may lend itself particularly well to having its operation adjusted by the controller. One or more of the benefits discussed above may therefore be provided to an advantageous extent. Instead or as well, a vortex tube may be a beneficially small, light, inexpensive, robust, simple and/or low maintenance air separator.

The inerting apparatus may comprise more than one air separator, connected in parallel or in series. In such an arrangement all the air separators may be vortex tubes, or one or more of the air separators may be membrane-based ASMs. Indeed, in other embodiments the inerting apparatus may comprise a single air separator which is an ASM or a plurality of air separators all of which are ASMs.

The inerting apparatus may consist essentially of said vortex tube. This may make the inerting apparatus, and thus the inerting system as a whole, advantageously small, light, inexpensive, robust, simple and/or low maintenance.

The inerting system may further comprise a throttle valve, wherein the controller is configured to adjust the operation of the inerting system by adjusting the throttle valve.

By adjusting the throttle valve, the controller can adjust the flow rate of air through a part of the inerting system. This, in turn, may allow the controller to have a beneficially influential effect on the inerting system. Instead or as well, it may provide a higher resolution level of control over the performance of the inerting system than can be obtained by connecting or disconnecting air separators.

The throttle valve may be provided in the NEA flow path or the OEA flow path. By controlling such a throttle valve the controller may be able to affect the separation performance of the inerting apparatus. For example, where the inerting apparatus is a vortex tube the throttle valve may be provided in the OEA flow path, and the controller may be configured to narrow and widen the throttle valve so as to increase and decrease the back pressure in the OEA flow path and in doing so change the purity and/or flow rate of NEA produced. As another example, where the inerting apparatus is an ASM the throttle valve may be provided in the NEA flow path, and the controller may be configured to widen the throttle valve (so as to increase the flow rate of NEA at the expense of purity) and narrow the throttle valve (so as to reduce the flow rate of NEA but boost its purity level).

The throttle valve may be provided in the inlet flow path. By controlling such a throttle valve the controller may be able to directly affect the amount of air taken in by the inerting system (and thus avoid taking in too much air and reducing thrust or worsening power consumption). This may also have the effect of controlling separation performance in the inerting apparatus (for instance by changing the flow rate through an ASM so as to change the purity of NEA produced, or by changing the speed of the vortex in a vortex tube and thereby changing the flow rate and/or purity of NEA produced).

Where the inerting apparatus comprises a vortex tube, the throttle valve may be provided in or on the vortex tube, for instance at an OEA outlet of the vortex tube.

The controller may be configured to adjust operation of the inerting system so as to maintain a target flow rate and/or a target oxygen concentration of NEA.

This may make the purity and/or flow rate of NEA less dependent on the conditions in which the system operates (such as temperature, flow rate and oxygen concentration of the inlet air flow). Instead or as well, it may reduce the extent to which the flow rate and/or purity of NEA is affected by degradation of the air separator(s) of the inerting apparatus, by adjusting operation of the inerting system to compensate for that degradation.

The controller may be configured to maintain the target flow rate and/or target oxygen concentration of NEA based at least in part on the feedback received from the oxygen concentration sensor. As an alternative, the controller may be configured to adjust operation of the inerting system in another way based at least in part on the feedback received from the oxygen concentration sensor (for instance to adjust a pressure or a temperature within the inerting system), and may further be configured to maintain a target flow rate and/or a target oxygen concentration of NEA using feedback from a different sensor (such as a pressure, flow rate or temperature sensor).

Where the inerting system comprises a throttle valve, the controller may be configured to maintain the target flow rate and/or target oxygen concentration by controlling the throttle valve. In other embodiments where the inerting system comprises a throttle valve, however, the controller may be configured to maintain the target flow rate and/or target oxygen concentration in a different way (for example by adjusting an inlet geometry of a vortex tube of the inerting apparatus) and may be configured to control the throttle valve so as to achieve a different function (such as regulation of the inlet air flow).

The controller may be configured to maintain a target flow rate of NEA based at least in part on feedback from a flow rate sensor (for instance a flow rate sensor in the NEA flow path). Instead or as well, the controller may be configured to maintain a target oxygen concentration of NEA based at least in part on feedback from the oxygen concentration sensor (for instance where the oxygen concentration sensor is in the NEA flow path). However, this should not be construed as limiting. There may be a relationship between flow rate of NEA and flow rate of OEA (for instance the flow rate of NEA plus the flow rate of OEA may be equal to the flow rate of the inlet air flow) which may allow the controller to maintain a target flow rate of NEA based on feedback from one or more flow rate sensors elsewhere. Equally, there may be a relationship between oxygen concentration of NEA and oxygen concentration of OEA which may allow the controller to maintain a target oxygen content of NEA based on feedback from one or more oxygen concentration sensors elsewhere. Furthermore, there may be a relationship between oxygen concentration and flow rate of NEA and/or of OEA. Accordingly, the controller may be configured to maintain a target flow rate of NEA based on feedback from the oxygen concentration sensor (e.g. in the NEA flow path or the OEA flow path), and/or may be configured to maintain a target oxygen concentration of NEA based on feedback from a flow rate sensor (e.g. in the NEA flow path or the OEA flow path).

Optionally:
the controller is further configured to switch between different operation modes of the inerting system; and
the different operation modes have different target flow rates and/or target oxygen concentrations of NEA.

This can allow the inerting system to produce different flow rates and/or purities of NEA in different circumstances, for instance to match different requirements of different flight phases of an aircraft.

Said modes may include a first mode in which the inerting system is configured to produce NEA of a first purity level at a first flow rate, and a second mode in which the inerting system is configured to produce NEA of a second purity level at a second flow rate. The first purity level may be higher than the second purity level and the first flow rate may be lower than the second flow rate. Thus, the first mode may be a "high purity" mode in which relatively low quantities of relatively pure NEA is produced, and the second mode may be a "high flow" mode in which greater quantities of less pure NEA is produced.

Where the modes include said first mode and said second mode, they may further include a third mode in which the inerting system is configured to produce NEA of a third purity level at a third flow rate. The third purity level may be between the first and second purity levels, and the third flow rate may be between the first and second flow rates. The third mode may therefore be an "intermediate" mode in which intermediate quantities of NEA are produced at an intermediate level of purity.

In each operation mode, the controller may be configured to adjust operation of the inerting system so as to maintain the associated target flow rate and/or target oxygen concentration of NEA.

This can allow the inerting system to produce different flow rates and/or purities of NEA in different circumstances as above, while providing one or more of the advantages of maintaining a target flow rate/purity of NEA.

Each operation mode may have a target flow rate, a target oxygen concentration, or both a target flow rate and a target oxygen concentration. Where each operation mode has a target flow rate and a target oxygen concentration, the different operation modes may have different target flow rates but the same target oxygen concentration, may have different target oxygen concentrations but the same target flow rate, or may have different target oxygen concentrations and different target flow rates.

The performance of the inerting system may be adjustable within a continuum in which the first and second modes (and the third mode, where present) are provided. For example where the inerting system comprises a throttle valve, the throttle valve may be adjustable to any position within a continuum that encompasses the first and second modes (and the third mode, where present). This may make the inerting system capable of a finer level of control, in a manner which is analogous to a car having a continuously variable transmission rather than a set of discrete gears.

The inerting system may further comprise a flow rate sensor, a pressure sensor and/or a temperature sensor, the or each sensor being connected to the controller.

This may give the controller a more complete view of how the inerting system is operating, which may for example allow it to make more informed or more precise adjustments to the operation of the inerting system.

The flow rate sensor (where present) may be positioned at any suitable location, for instance in the inlet flow path, the NEA flow path, the OEA flow path or the inerting apparatus (for instance in an air separator). The pressure sensor (where present) may be positioned at any suitable location, for instance in the inlet flow path, the NEA flow path, the OEA flow path or the inerting apparatus (for instance in an air separator). The temperature sensor (where present) may be positioned at any suitable location, for instance in or on the inlet flow path, the NEA flow path, the OEA flow path or the inerting apparatus (for instance in or on an air separator).

The controller may be configured to adjust operation of the inerting system based in part on feedback from the flow rate sensor (where present). Instead or as well, the controller may be configured to perform a different function based at least in part on feedback from the flow rate sensor, for instance detecting obstruction of a flow path (such as the inlet flow path, the NEA flow path, the OEA flow path or a flow path within the inerting system such as a flow path within an air separator).

The controller may be configured to adjust operation of the inerting system based in part on feedback from the pressure sensor (where present). Instead or as well, the controller may be configured to perform a different function based at least in part on feedback from the pressure sensor. As an example, the controller may be configured to detect a leak in a flow path (such as the inlet flow path, the NEA flow path, the OEA flow path or a flow path within the inerting system such as a flow path within an air separator) based at least in part on feedback from the pressure sensor. As another example, the pressure sensor may be provided in the inlet flow path and the controller may be configured to dynamically maintain the pressure in the inlet flow path at a target level (for instance by controlling a compressor or a throttle valve in or upstream of the inlet flow path) based at least in part on feedback from the pressure sensor. Such functionality may reduce the extent to which the inerting system takes in more air than it needs, which as noted above may have a detrimental effect on the thrust of an engine or the power consumption of a compressor.

The controller may be configured to adjust operation of the inerting system based in part on feedback from the temperature sensor (where present). Instead or as well, the controller may be configured to perform a different function based at least in part on feedback from the temperature sensor, for instance monitoring a risk of ice forming within the inerting system.

The controller may further be configured to monitor the performance of the inerting system over time.

This may allow the controller to be aware of the air separator(s) of the inerting apparatus losing efficacy over time. The controller may therefore be able to compensate for that change by adjusting the operation of the inerting system, thereby potentially reducing the need for the inerting system to be overbuilt. Instead or as well, this awareness of the loss of efficacy over time may allow maintenance to be performed on the inerting system only when it needs it, rather than on the basis of a hypothetical worst-case-scenario, thereby improving the service intervals of the inerting system.

The controller may be configured to monitor the performance of the inerting system over time by logging data received from the oxygen concentration sensor and/or one or more other sensors (such as a pressure sensor, flow rate sensor and/or a temperature sensor, where present).

The controller may be configured to monitor the performance of the inerting system over time by monitoring the performance of an air separator of the inerting apparatus. For example where the inerting apparatus comprises two or more air separators, the controller may be configured to monitor the performance of a specific one of the two or more air separators (such as the one which is predicted to lose efficacy more quickly). As an alternative, the controller may be configured to monitor the performance of the inerting system as a whole, for instance by monitoring the quality of NEA which may be produced by different air separators (or different combinations of air separators) at different times.

The controller may be configured to monitor the performance of the inerting system over time by monitoring feedback from the oxygen sensor over time, and/or by monitoring feedback from one or more other sensors (such as a flow rate sensor, a temperature sensor and/or a pressure sensor) over time.

The controller may be configured to trigger a maintenance operation if the performance of the inerting system becomes non-optimal.

The controller being able to trigger a maintenance operation when actually required may reduce the need for that maintenance operation to be performed pre-emptively on a worst-case-scenario basis, thereby improving the maintenance interval of the inerting system.

The controller may be configured to trigger the maintenance operation if a flow rate of the NEA produced by the inerting system drops below a predetermined threshold, and/or if an oxygen concentration of the NEA exceeds a predetermined threshold. As an alternative, the controller may be configured to trigger the maintenance operation if the flow rate of the inlet air flow drops below a predetermined threshold and/or if a pressure of the inlet air flow exceeds a predetermined threshold. As another alternative, the controller may be configured to assess whether or not to trigger the maintenance operation based on a combination of feedback from different sensors (for instance from a temperature sensor in the NEA path, which may indicate that a vortex tube of the inerting apparatus is not separating air in optimal fashion).

The maintenance operation may comprise a cleaning operation, which may involve passing a cleaning fluid through a part of the inerting system, back-flushing air through a part of the inerting system and/or warming a part of the inerting system so as to melt accumulated ice. Said part may include one or more air separators or a part thereof, and/or one or more of the flow paths or a part thereof.

Instead or as well, the maintenance operation may comprise lubricating a moving part such as a valve or a compressor, and/or changing a filter.

The controller may further be configured to shut down or bypass a part or all of the inerting apparatus upon detection of a fault in the performance of the inerting system.

This can allow the controller to prevent the inerting system from continuing to use the inerting apparatus (or part thereof) at a time when doing so would be detrimental to the inerting system or to the end user. For example, the controller may shut down or bypass an ASM in the case of a ruptured membrane so as to avoid contamination of the NEA, or may shut down or bypass a vortex tube in the case of partial blockage by dirt or ice so as to prevent the blockage from getting any worse. With less risk of continued use of the inerting apparatus when it would be detrimental, there may be less need for pre-emptive maintenance to be performed on a worst-case-scenario basis. In other words, the inerting system may be able to handle a fault well enough that the occurrence of a fault may be more tolerable.

Where the controller is configured to shut down or bypass part of the inerting apparatus, said part may be one or more air separators, for example. Where the controller is configured to shut down all of the inerting apparatus, it may be configured to shut down or bypass substantially the entire inerting system.

The controller may be configured to shut down all or part of the inerting apparatus by closing a shut-off valve in the inlet flow path and/or cutting power to a pump or compressor which is arranged to drive the inlet air flow, for example.

The controller may be configured to bypass all or part of the inerting apparatus by routing the inlet air through a bypass passage (which may lead to a backup air separator, a backup inerting apparatus or a backup inerting system), for example.

The controller may be configured to shut down or bypass a part or all of the inerting apparatus on a permanent basis (for instance until repair or replacement of faulty components can be performed).

As an alternative, the controller may be configured to temporarily shut down or bypass a part or all of the inerting apparatus, for instance for a predetermined time (such as at least 5 minutes, at least 10 minutes, at least 20 minutes or at least 30 minutes) or until a predetermined improvement in the performance of the inerting system has taken place.

The controller may be configured to detect the fault based on a reading of the oxygen concentration sensor and/or a reading of a flow rate sensor, crossing a predetermined threshold. For example, the controller may be configured to shut down or bypass a part or all of the inerting apparatus if a reading of an oxygen concentration sensor in the NEA flow path rises above a threshold, or if a reading of an oxygen concentration sensor in the OEA flow path drops below a threshold. As another example, the controller may be configured to shut down or bypass a part or all of the inerting apparatus if a reading of a flow rate sensor in the NEA flow path or inlet flow path drops below a threshold, or if a reading of a flow rate sensor in the OEA flow path rises above a threshold.

The controller may further be configured to predict a future fault based on an observed gradual change in the monitored performance of the inerting system. The gradual change may take place over several flight cycles, for instance at least 5, at least 10, at least 20 or at least 50 flight cycles.

The controller being able to predict a future fault may reduce the need to perform maintenance on a worst-case-scenario basis, thereby potentially providing longer maintenance intervals, while still ensuring that the maintenance can take place before a fault presents itself.

The future fault may be blockage of a vortex tube, or failure or blockage of a membrane of an ASM, for example.

The observed gradual change may be, for example, a change in oxygen concentration as measured by the oxygen concentration sensor, a gradual change in flow rate as measured by a flow rate sensor, a gradual change in pressure as measured by a pressure sensor, a gradual change in temperature as measured by a temperature sensor, or a combined gradual change in any combination thereof.

The inerting system may be an aircraft enclosure inerting system.

One or more of the advantages discussed above may have particular benefit in aviation.

According to a second aspect of the present invention there is provided an aircraft comprising an aircraft enclosure inerting system according to the second aspect of the invention.

Such an aircraft may exhibit one or more of the advantages discussed above.

According to a third aspect of the present invention there is provided a method of controlling an inerting system, the method comprising:
conveying an inlet air flow to an inerting apparatus along an inlet flow path;
using the inerting apparatus to separate the inlet air flow into nitrogen enriched air (NEA) and oxygen enriched air (OEA);
conveying the NEA away from the inerting apparatus along an NEA flow path and conveying the OEA away from the inerting apparatus along an OEA flow path; and
adjusting operation of the inerting system during use based at least in part on feedback received from an oxygen concentration sensor.

By adjusting operation of the inerting system during use based at least in part on oxygen concentration, the inerting system may be able to self-adapt during use rather than operating at a fixed level of performance, thereby making the method more versatile and/or efficient. For instance, the inerting system may be adjusted to self-adapt to changes in the conditions in which it is operating (for instance adapting to a reduction in the oxygen concentration of the inlet air flow by performing less thorough separation of the air and/or adapting to an increase in oxygen in the NEA by performing more stringent separation of the air), rather than being unduly affected by such circumstances. As another example, the inerting system may self-adapt to changes in performance due to degradation of an air separator.

Further, this self-adaptation can allow the method to produce NEA more efficiently, for instance reducing the over-separation of the air (with the associated reductions service life) and/or the taking in of excessive quantities of air (with the associated reduction in thrust or energy efficiency).

The oxygen concentration sensor may be positioned in one of said flow paths.

The oxygen concentration sensor may provide feedback on an oxygen concentration of air in the inlet flow path, the NEA flow path or the OEA flow path, for example.

Operation of the inerting system may be adjusted based on feedback from two oxygen concentration sensors, which may for example be positioned in different flow paths. Operation of the inerting system may be adjusted in use in one way based at least in part on feedback from one of the oxygen concentration sensors, and in another way based at least in part on feedback from the other of the oxygen concentration sensors. Instead or as well, operation of the inerting system may be adjusted in use based at least in part on combined feedback from both oxygen concentration sensors.

The method may comprise adjusting operation of the inerting system during use based at least in part on feedback received from three oxygen concentration sensors, for instance one oxygen concentration sensor positioned in each of said flow paths. Operation of the inerting system may be adjusted in one way based at least in part on feedback from two of said oxygen concentration sensors (for example the oxygen concentration sensor in the NEA flow path and the oxygen concentration sensor in the OEA flow path), and in another way based at least in part on feedback from the other of said oxygen concentration sensors (for example the oxygen concentration sensor in the inlet flow path).

Separating the inlet air flow may comprise centrifugally separating air using a vortex tube of the inerting apparatus.

Adjusting operation of a vortex tube may be performed with advantageous ease. One or more of the benefits discussed above may therefore be provided to an advantageous extent. Instead or as well, the use of a vortex tube may allow the method to be performed on apparatus which is a beneficially small, light, inexpensive, robust, simple and/or low maintenance.

The inerting apparatus may comprise more than one air separator, connected in parallel or in series. In such an arrangement all the air separators may be vortex tubes, or one or more of the air separators may be membrane-based ASMs. Indeed, in other embodiments the inerting apparatus may comprise a single air separator which is an ASM or a plurality of air separators all of which are ASMs.

The inlet air flow may be centrifugally separated into the NEA and the OEA in said vortex tube. This may allow the apparatus with which the method is performed to be advantageously small, light, inexpensive, robust, simple and/or low maintenance.

As an alternative, separating the inlet air flow may comprise separating the inlet air flow in two or more sequential steps, one of which is performed by centrifugally separating air using the vortex tube. For example, the vortex tube may separate the inlet air flow into a partially-nitrogen-enriched stream which is then refined by a further air separator. As another example, the vortex tube may separate a partially-nitrogen-enriched stream from another separator so as to form the NEA.

Adjusting operation of the inerting system may comprise adjusting a flow rate of air in the inerting system.

Adjusting the flow rate may have a beneficially influential effect on the inerting system. Instead or as well, it may provide a higher resolution level of control over the performance of the inerting system than can be obtained by connecting or disconnecting air separators.

Reference to adjusting a flow rate is not intended to include merely permitting or preventing a flow. Rather, it is intended to mean adjusting between different (non-zero) flow rates.

For the avoidance of doubt, reference to flow rate of "air" is intended to include OEA or NEA, as well as ambient air and partially-enriched air.

The adjusted flow of air may be a flow of NEA through the NEA flow path or of OEA through the OEA flow path. This may mean that the adjustment can effect the separation performance of the inerting apparatus. For example, where the inerting apparatus is a vortex tube the flow rate along the OEA flow path may be adjusted to increase and decrease the back pressure in the OEA flow path and in doing so change the purity and/or flow rate of NEA produced. As another example, where the inerting apparatus is an ASM the flow rate through the NEA flow path may be increased so as to increase the flow rate of NEA at the expense of purity, or decreased so as to reduce the flow rate of NEA but boost its purity level.

The flow rate of the inlet air flow through the inlet flow path may be adjusted. This may allow the amount of air taken in by the inerting system to be controlled (thus avoiding taking in too much air and reducing thrust or worsening power consumption). This may also have the effect of controlling separation performance in the inerting apparatus (for instance by changing the flow rate through an ASM so as to change the purity of NEA produced, or by changing the speed of the vortex in a vortex tube and thereby changing the flow rate and/or purity of NEA produced).

Adjusting operation of the inerting system may comprise dynamically maintaining a target flow rate and/or a target oxygen concentration of the NEA conveyed along the NEA flow path.

Dynamically maintaining the target flow rate or target oxygen concentration may make the purity and/or flow rate of NEA less dependent on the conditions in which the system operates (such as temperature, flow rate and oxygen concentration of the inlet air flow). Instead or as well, it may reduce the extent to which the flow rate and/or purity of NEA is affected by degradation of the air separator(s) of the inerting apparatus, since operation of the inerting system may be adjusted to compensate for that degradation.

The target flow rate and/or target oxygen concentration of NEA may be dynamically maintained based at least in part on the feedback received from the oxygen concentration sensor. As an alternative, operation of the inerting system may be adjusted in another way based at least in part on the feedback received from the oxygen concentration sensor (for instance a pressure or a temperature within the inerting system may be adjusted), and the target flow rate and/or a target oxygen concentration of NEA may be maintained based on feedback from a different sensor (such as a pressure, flow rate or temperature sensor).

Where adjusting operation of the inerting system comprises adjusting a flow rate of air in the inerting system, the target flow rate and/or target oxygen concentration may be controlled by adjusting said flow rate of air. In other embodiments where adjusting operation of the inerting system comprises adjusting a flow rate of air in the inerting system the inerting system, however, the target flow rate and/or target oxygen concentration may be maintained in a different way (for example by adjusting an inlet geometry of a vortex tube of the inerting apparatus) and adjusting the flow rate of air may achieve a different function (such as regulation of the inlet air flow).

The method may comprise dynamically maintaining a target flow rate of NEA based at least in part on feedback from a flow rate sensor (for instance a flow rate sensor in the NEA flow path). Instead or as well, method may comprise dynamically maintaining a target oxygen concentration of NEA based at least in part on feedback from the oxygen concentration sensor (for instance where the oxygen concentration sensor is in the NEA flow path). However, this should not be construed as limiting. There may be a relationship between flow rate of NEA and flow rate of OEA (for instance the flow rate of NEA plus the flow rate of OEA may be equal to the flow rate of the inlet air flow) which may allow a target flow rate of NEA to be dynamically maintained based on feedback from one or more flow rate sensors elsewhere. Equally, there may be a relationship between oxygen concentration of NEA and oxygen concentration of OEA which may allow a target oxygen content of NEA to be dynamically maintained based on feedback from one or more oxygen concentration sensors elsewhere. Furthermore, there may be a relationship between oxygen concentration and flow rate of NEA and/or of OEA. Accordingly, a target flow rate of NEA may be dynamically maintained based on feedback from the oxygen concentration sensor (e.g. in the NEA flow path or the OEA flow path), and/or a target oxygen concentration of NEA may be dynamically maintained based on feedback from a flow rate sensor (e.g. in the NEA flow path or the OEA flow path).

The method may comprise switching the inerting system between different operation modes.

This can allow the method to produce different flow rates and/or purities of NEA in different circumstances, for instance to match different requirements of different flight phases of an aircraft.

Said modes may include a first mode in which NEA is produced at a first purity level and a first flow rate, and a second mode in which NEA is produced at a second purity level and a second flow rate. The first purity level may be higher than the second purity level and the first flow rate may be lower than the second flow rate. Thus, the first mode may be a "high purity" mode in which relatively low quantities of relatively pure NEA is produced, and the second mode may be a "high flow" mode in which greater quantities of less pure NEA is produced.

Where the modes include said first mode and said second mode, they may further include a third mode in which NEA is produced at a third purity level and a third flow rate. The third purity level may be between the first and second purity levels, and the third flow rate may be between the first and second flow rates. The third mode may therefore be an "intermediate" mode in which intermediate quantities of NEA are produced at an intermediate level of purity.

The method may further comprise maintaining a different target flow rate and/or a target oxygen concentration in each mode.

This can allow the method to produce different flow rates and/or purities of NEA in different circumstances as above, while providing one or more of the advantages of maintaining a target flow rate/purity of NEA.

Each operation mode may have a target flow rate, a target oxygen concentration, or both a target flow rate and a target oxygen concentration. Where each operation mode has a target flow rate and a target oxygen concentration, the different operation modes may have different target flow rates but the same target oxygen concentration, may have different target oxygen concentrations but the same target flow rate, or may have different target oxygen concentrations and different target flow rates.

Switching the inerting system between different operation modes may comprise adjusting the performance of the inerting system within a continuum in which the first and second modes (and the third mode, where present) are provided. For example where adjusting operation of the inerting system comprises adjusting a flow rate of air in the inerting system, the flow rate may be adjustable to any value within a continuum that encompasses the first and second modes (and the third mode, where present). This may allow the method to be subjected to a finer level of control, in a manner which is analogous to a car having a continuously variable transmission rather than a set of discrete gears.

The method may further comprise measuring a flow rate and/or a pressure level and/or a temperature in the inerting system.

This may provide a more complete view of how the inerting system is operating, which may for example allow more informed or more precise adjustments to the operation of the inerting system to be made.

A flow rate may be measured at any suitable location, for instance in the inlet flow path, the NEA flow path, the OEA flow path or the inerting apparatus (for instance in an air separator). A pressure level may be measured at any suitable location, for instance in the inlet flow path, the NEA flow path, the OEA flow path or the inerting apparatus (for instance in an air separator). A temperature may be measured at any suitable location, for instance in or on the inlet flow path, the NEA flow path, the OEA flow path or the inerting apparatus (for instance in or on an air separator).

Operation of the inerting system may be adjusted based in part on a measured flow rate. Instead or as well, a different function may be performed based at least in part on the measured flow rate, for instance detecting obstruction of a flow path (such as the inlet flow path, the NEA flow path, the OEA flow path or a flow path within the inerting system such as a flow path within an air separator).

Operation of the inerting system may be adjusted based in part on a measured pressure. Instead or as well, a different function may be performed based at least in part on the measured pressure. As an example, the method may comprise detecting a leak in a flow path (such as the inlet flow path, the NEA flow path, the OEA flow path or a flow path within the inerting system such as a flow path within an air separator) based at least in part on a measured pressure in that flow path. As another example, the pressure in the inlet flow path may be measured and the pressure in the inlet flow path may be dynamically maintained at a target level (for instance by controlling a compressor or a throttle valve in or upstream of the inlet flow path) based at least in part on that measured pressure. Such functionality may reduce the extent to which the method takes in more air than it needs, which as noted above may have a detrimental effect on the thrust of an engine or the power consumption of a compressor.

Operation of the inerting system may be adjusted based in part on a measured temperature. Instead or as well, a different function may be performed based at least in part on the measured temperature, for instance monitoring a risk of ice forming within the inerting system.

The method may further comprise monitoring performance of the inerting system over time.

This may allow the method to detect, and compensate for, the loss of efficacy over time of the air separator(s) of the inerting system. This, in turn, may reduce the need for the inerting system to be overbuilt. Instead or as well, this detection of the loss of efficacy over time may allow maintenance to be performed on the inerting system only when it needs it, rather than on the basis of a hypothetical worst-case-scenario, thereby improving the service intervals of the inerting system on which the method is performed.

The performance of the inerting system may be monitored over time by logging oxygen concentration measurements and/or other measurements (such as pressure measurements, flow rate measurements and/or a temperature measurements, where these are taken.

The performance of the inerting system over time may be monitored by monitoring the performance of an air separator of the inerting apparatus. For example where the inerting apparatus comprises two or more air separators, the performance of a specific one of the two or more air separators (such as the one which is predicted to lose efficacy more quickly) may be monitored. As an alternative, the performance of the inerting system as a whole may be monitored, for instance by monitoring the quality of NEA which may be produced by different air separators (or different combinations of air separators) at different times.

The performance of the inerting system over time may be monitored by monitoring feedback from the oxygen sensor over time, and/or by monitoring measurements from one or more other sensors (such as a flow rate sensor, a temperature sensor and/or a pressure sensor) over time.

The method may further comprise triggering a maintenance operation if performance of the inerting system becomes non-optimal.

This may reduce the need for that maintenance operation to be performed pre-emptively on a worst-case-scenario basis, thereby improving the maintenance interval with which the method can be performed.

The maintenance operation may be triggered if a flow rate of the NEA produced by the inerting system drops below a predetermined threshold, and/or if an oxygen concentration of the NEA exceeds a predetermined threshold. As an alternative, the maintenance operation may be triggered if the flow rate of the inlet air flow drops below a predetermined threshold and/or if a pressure of the inlet air flow exceeds a predetermined threshold. As another alternative, whether or not to trigger the maintenance operation may be assessed based on a combination of feedback from different sensors (for instance from a temperature sensor in the NEA path, which may indicate that a vortex tube of the inerting apparatus is not separating air in optimal fashion).

The maintenance operation may comprise a cleaning operation, which may involve passing a cleaning fluid through a part of the inerting system, back-flushing air through a part of the inerting system and/or warming a part of the inerting system so as to melt accumulated ice. Said part may include one or more air separators or a part thereof, and/or one or more of the flow paths or a part thereof.

Instead or as well, the maintenance operation may comprise lubricating a moving part such as a valve or a compressor, and/or changing a filter.

The method may further comprise shutting down or bypassing part or all of the inerting apparatus upon detection of a fault in the performance of the inerting system.

This can avoid continued use of the inerting apparatus (or part thereof) at a time when doing so would be detrimental to the inerting system or to the end user. For example, an ASM may be shut down or bypassed in the case of a ruptured membrane so as to avoid contamination of the NEA, or a vortex tube may be shut down or bypassed in the case of partial blockage by dirt or ice so as to prevent the blockage from getting any worse. With less risk of continued use of the inerting apparatus (or part thereof) when it would be detrimental, there may be less need for pre-emptive maintenance to be performed on a worst-case-scenario basis. In other words, the inerting system may be able to handle a fault well enough that the occurrence of a fault may be more tolerable.

Where a part of the inerting apparatus is shut down or bypassed, said part may be one or more air separators, for example. Where all of the inerting apparatus is bypassed or shut down, substantially the entire inerting system may be bypassed or shut down.

All or part of the inerting apparatus may be shut down by closing a shut-off valve in the inlet flow path and/or cutting power to a pump or compressor which is arranged to drive the inlet air flow, for example.

All or part of the inerting apparatus may be bypassed by routing the inlet air through a bypass passage (which may lead to a backup air separator, a backup inerting apparatus or a backup inerting system), for example.

Part or all of the inerting apparatus may be shut down or bypassed on a permanent basis (for instance until repair or replacement of faulty components can be performed).

As an alternative, part or all of the inerting apparatus may be shut down or bypassed temporarily, for instance for a predetermined time (such as at least 5 minutes, at least 10 minutes, at least 20 minutes or at least 30 minutes) or until a predetermined improvement in the performance of the inerting system has taken place.

The fault may be detected based on a reading of the oxygen concentration sensor and/or a reading of a flow rate sensor, crossing a predetermined threshold. For example, a part or all of the inerting apparatus may be shut down or bypassed if a reading of an oxygen concentration sensor in the NEA flow path rises above a threshold, or if a reading of an oxygen concentration sensor in the OEA flow path drops below a threshold. As another example, a part or all of the inerting apparatus may be shut down or bypassed if a reading of a flow rate sensor in the NEA flow path or inlet flow path drops below a threshold, or if a reading of a flow rate sensor in the OEA flow path rises above a threshold.

The method may further comprise predicting a future fault based on an observed gradual change in the monitored performance of the inerting system.

Being able to predict a future fault may reduce the need to perform maintenance on a worst-case-scenario basis, thereby potentially providing longer maintenance intervals, while still ensuring that the maintenance can take place before a fault presents itself.

The future fault may be blockage of a vortex tube, or failure or blockage of a membrane of an ASM, for example.

The observed gradual change may be, for example, a change in oxygen concentration as measured by the oxygen concentration sensor, a gradual change in flow rate as measured by a flow rate sensor, a gradual change in pressure as measured by a pressure sensor, a gradual change in temperature as measured by a temperature sensor, or a combined gradual change in any combination thereof.

The method may be a method of controlling an aircraft enclosure inerting system.

One or more of the advantages discussed above may have particular benefit in aviation.

The method may use the apparatus of the first or second aspect of the invention.

It will of course be appreciated that features described in relation to one aspect of the present invention may be incorporated into other aspects of the present invention.

### DESCRIPTION OF THE DRAWINGS

Embodiments of the present invention will now be described by way of example only with reference to the accompanying schematic drawings of which:
Figure 1 shows a plan view of an aircraft according to a first embodiment of the invention;
Figure 2 shows a simplified cross-sectional side view of a vortex tube of an enclosure inerting system of the aircraft of Figure 1;
Figure 3 shows a simplified cross-sectional end view of the vortex tube of Figure 2;
Figure 4 shows a schematic of an inerting system of the aircraft of Figure 1, which includes the vortex tube of Figures 2 and 3;
Figure 5 shows a flow chart of a method according to the first embodiment of the invention;
Figure 6 shows a schematic of inerting apparatus of an aircraft according to a second embodiment of the invention; and
Figure 7 shows a schematic of an inerting system of an aircraft according to a third embodiment of the invention.

### DETAILED DESCRIPTION

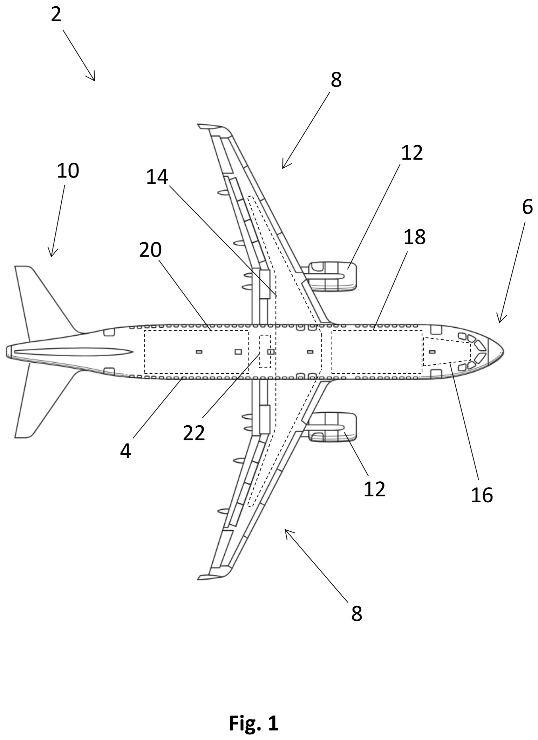

Figure 1 shows an aircraft 2 according to a first embodiment of the invention. It has a fuselage 4 with a nose 6, two wings 8 and a tail 10. Each wing 8 extends from the fuselage 4 in a spanwise direction and supports an engine 12 part way along its spanwise length. An enclosure in the form of a fuel tank 14 extends inside the wings 8 and through the fuselage 4 therebetween. Rearward of the nose 6 is another enclosure 16, which in this case contains some of the power electronics of the aircraft 2. Also positioned within the fuselage is a cargo bay made up of a fore enclosure 18 and an aft enclosure 20. The aircraft 2 also has an enclosure inerting system 22 which is arranged to provide NEA to each of the enclosures 14, 16, 18, 20 as discussed below.

The inerting system 22 receives an inlet air flow from a ram air channel (not visible), then pressurises it using a compressor (not visible). The inerting system 22 separates the inlet air flow into NEA, which is supplied to the enclosures 14, 16, 18, 20 as needed, and OEA. In the present embodiment the OEA is merely exhausted overboard, but in other embodiments the OEA can be used e.g. for heating or to supply oxygen to the cabin or one of the engines 12 of the aircraft 2.

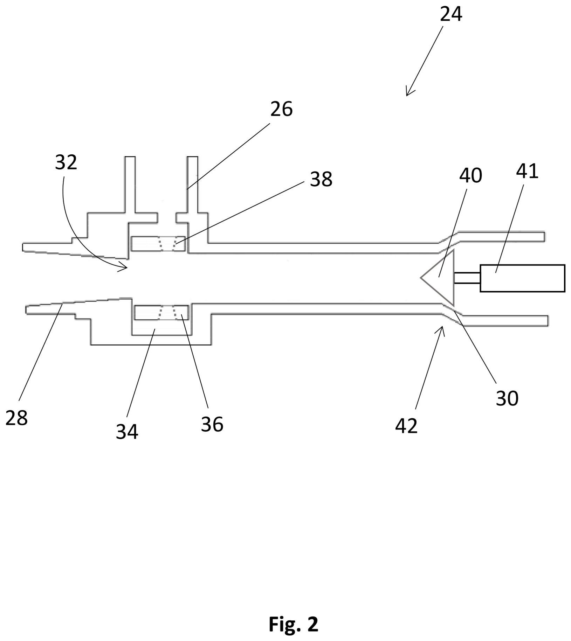

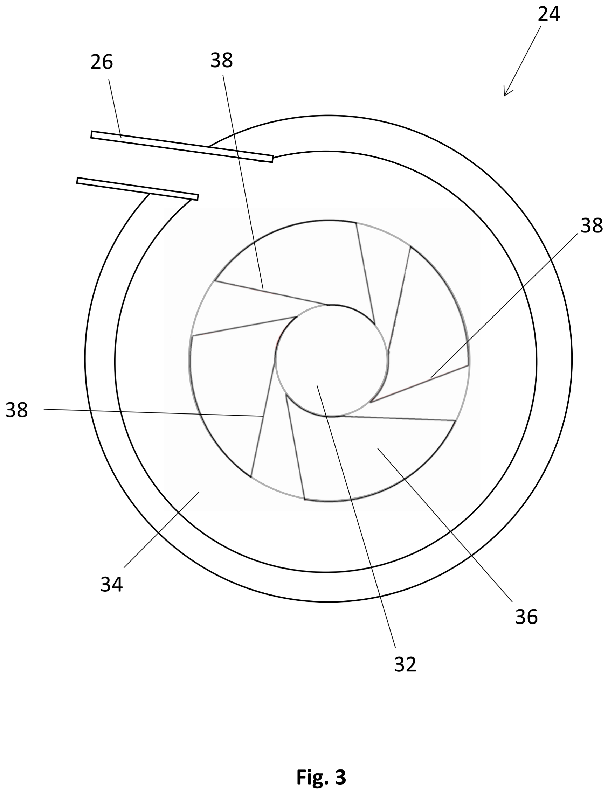

In the present embodiment the separation of air takes place centrifugally, in an air separator in the form of a vortex tube. The vortex tube is shown schematically in Figures 2 and 3, which will now be referred to in combination with Figure 1.

The vortex tube 24 has an inlet 26, an NEA outlet 28 and an OEA outlet 30. The vortex tube 24 defines a vortex chamber 32, which is circumferentially surrounded by a plenum chamber 34 fed from the inlet 26. Positioned concentrically between the plenum chamber 34 and the vortex chamber 32, and separating the plenum chamber 34 from the vortex chamber 32 from each other, is a swirl generator 36. The swirl generator 36 has a set of four inlet passages 38, positioned at intervals of 90 degrees around the vortex chamber 32, through which air can flow from the plenum chamber 34 into the vortex chamber 32. In this embodiment the inlet passages 38 take the form of tangential inlets which impart swirl into air flow entering the vortex chamber 32.

The NEA outlet 28 takes the form of a gradually widening aperture extending away from the vortex chamber 32 in one axial direction. The OEA outlet 30 takes the form of an annular passageway positioned circumferentially around a conical projection 40 and extending away from the vortex chamber 32 in the opposite axial direction to the NEA outlet.

In use, the inlet air flow enters the plenum chamber 34 through the inlet 26. The inlet air flow then enters the vortex chamber 32 tangentially through the inlet passages 38 of the swirl generator 36. The inlet passages 38 narrow towards the vortex chamber 32, which accelerates the air passing through them, and introduce the air into the vortex chamber 32 tangentially so as to impart swirl as mentioned above. As the air swirls within the vortex chamber 32, it separates into an outer vortex travelling helically in one direction (to the right from the perspective of Figure 2) and an inner vortex travelling in the other direction (to the left from the perspective of Figure 2), with both vortices rotating in the same direction.

The rotation of the air in the two vortices has the effect of throwing the heavier gasses outwards into the outer vortex, with lighter gasses remaining in (or being displaced into) the inner vortex. With oxygen being heavier than nitrogen, the oxygen tends to be thrown out into the outer vortex while the nitrogen tends to remain in the inner vortex. Accordingly, the inner vortex is made up of NEA and the outer vortex is made up of OEA. The NEA forming the inner vortex exits the vortex chamber 32 through the NEA outlet 28, whereupon in this embodiment it is fed to a storage tank (not shown) of the inerting system 22 for onward distribution to the enclosures 14, 16, 18, 20 as needed. The OEA forming the outer vortex exits the vortex chamber 32 through the OEA outlet 30, whereupon it is directed towards an exhaust port (not shown) of the aircraft 2.

Heavier gasses being thrown out from the inner vortex and into the outer vortex also has the effect of expanding the air in the inner vortex and compressing the air in the outer vortex. This has the effect of cooling the NEA in the inner vortex and heating the OEA in the outer vortex.

In this particular embodiment, the position of the conical projection 40 is movable axially by an actuator 41, in this case an electric linear actuator with a lead screw mechanism, so as to vary the cross sectional area of the OEA outlet 30. Changing the cross sectional area of the OEA outlet 30 has the effect of altering the proportion of air which exits through that outlet 30 rather than the NEA outlet 28, which affects the relative sizes of the inner and outer vortices. This, in turn, affects the degree of air separation performed by the vortex tube 24 and the flow rates of OEA and NEA produced. The conical projection 40 and OEA outlet 30 therefore co-operatively form a throttle valve 42 as will be described in more detail later.

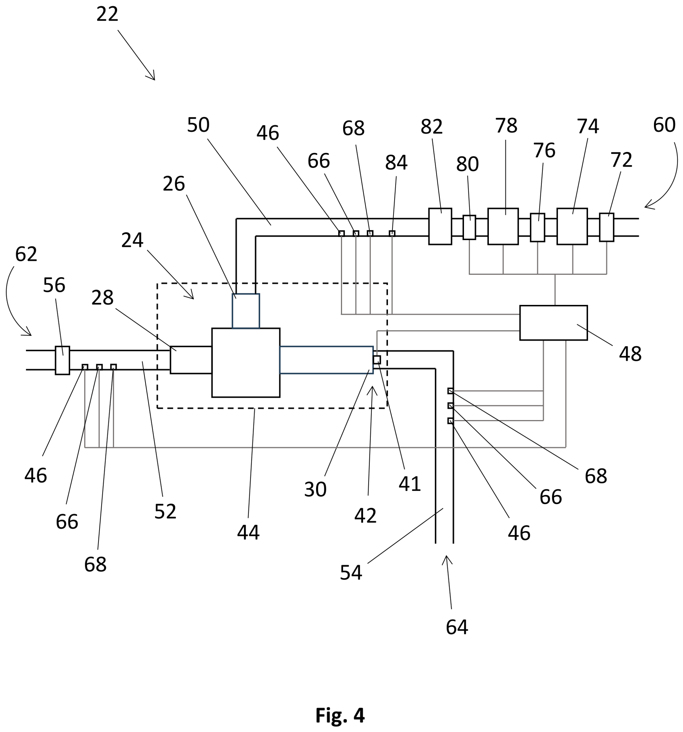

The full enclosure inerting system 22 of the present embodiment is shown in Figure 4, which will now be referred to in combination with Figures 1 to 3. As well as the vortex tube 24, which in this embodiment forms the entire inerting apparatus 44, the inerting system has a set of three oxygen concentration sensors 46 in the form of lambda probes, a controller 48, an inlet duct 50, an NEA duct 52 and an OEA duct 54. The controller 48 is operably coupled to the actuator 41 that moves the conical projection 40, therefore the throttle valve 42 formed by the projection 40 is adjustable by the controller 48.

The inlet air duct 50 extends from the ram air channel (not visible) of the aircraft 2 to the inlet 26 of the vortex tube 24. The inlet duct 50, and the inlet 26, plenum chamber 34 and inlet passages 38 of the vortex tube 24, form part of an inlet flow path 60 which receives an inlet air flow from the ram air channel (not visible) and conveys is into the vortex chamber 32 for separation.

The NEA duct 52 extends from the NEA outlet 28 of the vortex tube 24 towards the enclosures 14, 16, 18, 20 of the aircraft 2. Positioned in the NEA duct 52 is a check valve 58 configured to prevent flow of NEA (or indeed any other gas) backward into the vortex tube 24 through the NEA outlet 28. The NEA duct 52, check valve 56 and NEA outlet 28 together form an NEA flow path 62 configured to convey the NEA produced by the inerting apparatus 44 (i.e., the vortex tube 24) in the vortex chamber 32 towards the enclosures 14, 16, 18, 20.

The OEA duct 54 extends from the OEA outlet 30 of the vortex tube to the exhaust port (not visible) of the aircraft 2 through which it can be ejected overboard. Thus, the OEA duct and the OEA outlet 30 of the vortex tube 24 together form an OEA flow path 64 configured to convey the OEA away from the vortex chamber 32 of the inerting apparatus 44 and to the exhaust port.

One of the oxygen concentration sensors 46 is positioned in each of the three ducts 50, 52, 54, and configured to measure the oxygen concentration of the air (i.e. the inlet air flow, the NEA or the OEA) therein. The oxygen concentration sensors 46 are all connected to the controller 48, and are configured to send feedback representative of their measured oxygen concentrations to the controller 48 for processing. The controller 48 is configured to adjust the operation of the inerting system 22 based in part on the feedback from the three oxygen concentration sensors 46 as will be discussed in more detail later.

The inerting system 22 also has a set of three temperature sensors 66 in the form of thermocouples, and three flow rate sensors 68. One temperature sensor 66 and one flow rate sensor 68 is positioned in each of the flow paths 60, 62, 64. The temperature sensors 66 are configured to measure the temperature of the air flowing through their respective flow paths 60, 62, 64, and to send feedback representative of their measured temperatures to the controller 48 for processing. Equally, the flow rate sensors 68 are configured to measure the flow rate of the air flowing through their respective flow paths 60, 62, 64, and to send feedback representative of their measured flow rates to the controller 48 for processing. The controller 48 is also configured to adjust the operation of the inerting system 22 based in part on the feedback from the temperature sensors 66 and flow rate sensors 68, as will be discussed in more detail later.

The inerting system 22 also has a first shut-off valve 72, the compressor 74 mentioned above, a second shut-off valve 76, a filter 78, a further throttle valve 80 and an air drier 82. These components are positioned along the inlet duct 50, therefore may each be considered to form part of the inlet flow path 60. The shut-off valves 74, 76 are connected to the controller 48, which can open or close them so as to permit or prevent the inlet air flow from passing along the inlet duct 50 into the vortex tube 24. The first shut-off valve 74 is positioned to allow the inlet air flow to be blocked from entering the compressor 74, as may be beneficial if the inlet air flow is too hot and/or dirty and would pose a risk of damage to the compressor 74. The second shut-off valve 74 is positioned to allow the inlet air flow to be blocked from entering the filter from the compressor 74, which may be beneficial if the compressor experiences a fault which could lead to it releasing dirt into the air, or if there is a desire to shut down the inlet air flow quickly (since compressed air within the compressor 74 could still flow if only the first shut-off valve 72 were closed.

The compressor 74 is also connected to the controller 48, which is configured to turn the compressor 74 on and off and change its speed as needed. The throttle valve 80 is also connected to the controller 48, which is configured to widen and narrow it so as to control the flow rate of the inlet air flow passing along the inlet duct 50 as discussed in more detail later. In a modification of the present embodiment the throttle valve 80 may be closed completely so as to prevent any flow of inlet air. The throttle valve 80 may therefore function as a combined throttle valve and shut-off valve. Such a modification may therefore have no need for a second shut-off valve, and indeed in some modifications the throttle valve may be the only shut-off valve of the inerting system.

The inerting system 22 also has a pressure sensor 84 positioned in the inlet duct 50 and connected to the controller 48. The pressure sensor 84 is configured to measure the pressure in the inlet flow path 60 and to send feedback representative of the measured pressure to the controller 48 for processing. The controller 48 is also configured to adjust the operation of the inerting system 22 based in part on the feedback from the pressure sensor 84.

In the present embodiment, the controller 48 is configured to adjust the operation of the inerting system 22 based on the feedback from the pressure sensor 84 by adjusting the throttle valve 80 so as to dynamically maintain the pressure in the inlet flow path 50 at a target level. If the feedback from the pressure sensor 84 indicates that the pressure in the inlet flow path 50 has exceeded the target level then the controller responds by narrowing the throttle valve 80. Equally, if the feedback from the pressure sensor 84 indicates that the pressure in the inlet flow path 50 has dropped below the target level then the controller responds by widening the throttle valve 80. While the pressure in the inlet flow path 50 is at the desired level then the controller makes no adjustment to the throttle valve 80.

In the present embodiment, the controller 48 also adjusts the operation of the inerting system 22 based on the feedback from the pressure sensor 84 by adjusting speed at which the compressor 74 runs. More particularly, the controller 48 speeds the compressor 74 up (as well as widening the throttle valve 80) if the pressure sensor 84 indicates that the pressure in the inlet flow path 60 is too low, and slows it down (as well as widening the throttle valve 80) if the pressure sensor 84 indicates that the pressure in the inlet flow path 60 is too high.

As well as being configured to dynamically maintain the pressure in the inlet flow path 50 at a target level, the controller 48 is also configured to dynamically maintain the oxygen concentration and the flow rate of the NEA produced (as measured by the oxygen concentration sensor 46 and flow rate sensor 68 in the NEA duct 52) at respective target levels. In the present embodiment the controller dynamically maintains the oxygen concentration and the flow rate of the NEA by adjusting the throttle valve 42 formed by the OEA outlet 30 and conical projection 40 of the vortex tube 42. By using the actuator 41 to move the conical projection 40 of the throttle valve 42, the controller 48 can widen or narrow the flow path through OEA outlet 30. By widening the flow path the controller 48 can increase the level of separation within the vortex chamber 32, making the NEA purer (i.e. lowering its oxygen concentration) but at the expense of flow rate. Equally, by narrowing the flow path the controller can reduce the level of separation taking place in the vortex chamber 32, increasing the flow rate of NEA but at the expense of a higher oxygen content.

The controller 48 is therefore configured to respond to a drop in the flow rate of NEA (as measured by the flow rate sensor 68 in the NEA flow path 62) or an increase in its purity by narrowing the throttle valve 42. Equally, it is configured to respond to a drop in the oxygen concentration of the NEA (as measured by the oxygen concentration sensor 46 in the NEA flow path 62) or an increase in its flow rate by widening the throttle valve 42. With the flow rate of the NEA and its oxygen concentration being linked, the controller would be able to dynamically maintain both targets using only flow rate feedback or only oxygen concentration feedback. However, in the present embodiment both types of feedback are combined so as to minimise the effect of noise on the precision of control and improve the resilience of the system 22 to a failed sensor.

Indeed, feedback from the temperature sensors 66 is also used the same reason. Since the change in temperature which takes place is related to the level of separation in the vortex chamber 32, with knowledge of the temperature of the inlet air flow (from the temperature sensor 66 in the inlet flow path 60) and the temperatures of the NEA and OEA (from the temperature sensors 66 in the NEA flow path 62 and the OEA flow path 64), the controller can deduce the level of separation taking place in the vortex chamber 32 and thus the purity of the NEA.

It is noteworthy that it would be possible for the controller 48 to adjust purity and flow rate of NEA by adjusting the throttle valve 80 in the inlet flow path 50 and/or the compressor 74 instead or as well, since different flow rates of inlet air flow affect the behaviour of the vortex in the vortex chamber 32 and thus affect flow rates and levels of separation therein. In the present embodiment, however, pressure regulation of the inlet air flow is separated from maintenance of NEA purity and flow rates, so as to enable simpler control algorithms to be used.

The inerting system 22 of the present embodiment has three different operation modes, each with its own target flow rate and target oxygen concentration for the NEA. The system 22 has a high purity mode in which the inerting system 22 produces particularly pure NEA as low flow rates, a high flow mode in which the inerting system 22 produces high flow rates of considerably less pure NEA, and an intermediate mode in which the inerting system 22 produces NEA at a purity between those of the high purity and high flow modes, at a flow rate between those of the high purity and high flow modes. The controller is configured to switch the inerting system 22 between the modes by making step changes in the position of the conical projection 40. It then dynamically maintains that mode's target purity and target flow rate of NEA in the same manner as discussed above.

As well as dynamically maintaining the pressure of the inlet air flow, the purity of the NEA and the flow rate of the NEA, the controller 48 is configured to monitor the performance of the inerting system 22 over time. More particularly, the controller 48 logs the measurements taken by the oxygen concentration sensors 46, temperature sensors 66, flow rate sensors 68 and pressure sensor 84 and monitors changes in those readings over time. Based on the changes and trends that the data shows, the controller 48 can take different actions.

As a first example, the controller 48 is configured to trigger a maintenance operation if the performance of the inerting system becomes non-optimal. More specifically, if the data suggests that flow through the vortex tube 24 is becoming slower (for instance if the pressure in the inlet duct 50 is higher, and/or if the flow rates of the NEA and OEA both drop), the controller concludes that the vortex tube 24 may be partially blocked with ice. It then triggers a maintenance operation, namely warming the vortex tube 24 using an external heater (not visible) so as to melt that ice. The controller 48 is configured to take the same action if the temperatures in the inlet air flow path 60 and NEA flow path 62, determined by the temperature sensors 66, indicate temperatures low enough that icing up of the vortex tube 24 is deemed likely.

As a second example, the controller 48 is configured to shut down the entire inerting system 22 by closing one of the shut-off valves 72, 76 if it detects a fault in the system which cannot be remedied by a maintenance operation. For instance, if warming the vortex tube 24 is not able to clear a blockage (as indicated by the flow through the vortex tube 24 not speeding up after back flushing), which may be the case if the blockage is made of dirt rather than ice, then the controller 48 closes one of the shut-off valves 72, 76 so as to prevent any further air passing through the vortex tube (which might make the blockage worse). Equally, if the controller 48 detects that there is a leak in the inerting system 22 (for instance if the combined flow rates of NEA and OEA start to deviate from the flow rate of the inlet air flow) then it shuts one of the shut-off valves 72, 76 to shut down the inerting system 22 and prevent further leakage.

As a third example, the controller 48 is configured to predict a future fault based on an observed gradual change in the monitored performance of the inerting system 22. More particularly, if the data logged by the controller shows a gradual decrease in the air flow through the vortex tube 24, this may represent an accumulation of dirt which may eventually clog the vortex tube. The controller 48 is configured to predict when that fault (clogging of the vortex tube) is likely to take place, whereupon it alerts a user of the expected timing of the expected clog so that they can clean the vortex tube before that fault develops. The controller 48 is also configured to monitor the flow through the inerting system 22 so as to predict when wear of the compressor 74 will bring its performance below an acceptable level and notify a user accordingly.

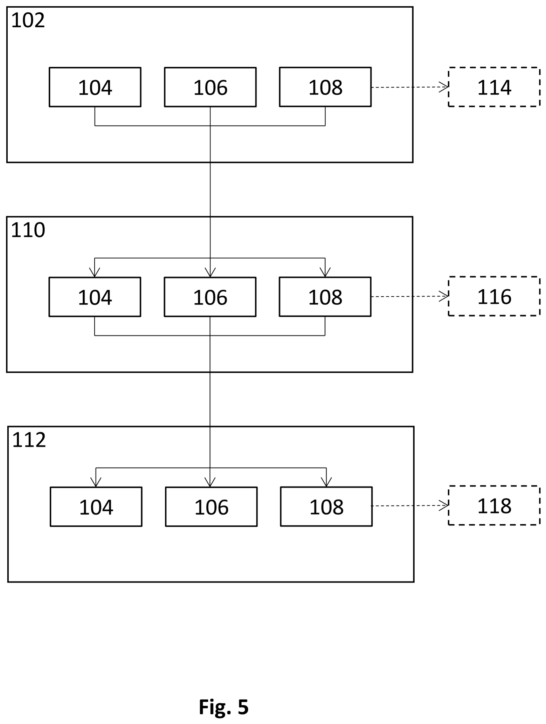

A method of use of the inerting system 22 (and indeed of the aircraft as a whole) will now be described with reference to Figure 5 along with Figures 1 to 4.

Before the aircraft 2 takes off, the controller 48 places the inerting system 22 in the high purity mode 102. The inlet air flow from the ram air channel (not shown) is conveyed along the inlet flow path 60. The air is drawn along the inlet duct 50 and through the first shut-off valve 72, is pressurised by the compressor 74, passes through the second shut-off valve 76 and the filter 78, passes through the throttle valve 80 and the remainder of the inlet duct 50 before entering the vortex tube 24 at the inlet 26. The inlet air flow then enters the plenum chamber 34 from which it passes into the vortex chamber 32 through the inlet passages 38.

As described previously, in the vortex chamber 32 the inlet air flow is separated into NEA which exits the vortex tube 24 through the NEA outlet 28, and OEA which exits the vortex tube 24 through the OEA outlet 30. The NEA is conveyed away from the inerting apparatus 44 (i.e., the vortex tube 24) along the NEA flow path 64, through the NEA duct 52 and the check valve 56, whereupon it can be supplied to the enclosures 14, 16, 18, 20 as needed. The OEA is conveyed away from the inerting apparatus 44 along the OEA flow path 64 through the OEA duct 54, to the exhaust port (not visible) from where it is ejected. With the inerting system 22 in the high purity mode, the throttle valve 42 of the vortex tube 24 is set to a wide position so that the vortex tube 24 produces very pure NEA at a low flow rate.

During operation of the inerting system 22 in this mode, the controller 48 dynamically maintains 104 the flow rate of NEA and the purity of the NEA at their respective target levels. As outlined above, it adjusts operation of the inerting system by adjusting the throttle valve 42 so as to adjust the flow rates of the NEA and OEA (thereby also adjusting their relative oxygen concentrations), when this is deemed necessary based on feedback from the oxygen concentration sensors 46, temperature sensors 66 and flow rate sensors 68. The controller 48 also dynamically maintains 106 the pressure of the air in the inlet flow path 60 based on feedback from the pressure sensor 84 by adjusting the throttle valve 80 so as to adjust the flow rate of the inlet air flow, as also described above. The controller 48 also monitors the performance 108 of the inerting system 22 in the manner discussed above.

The inerting system 22 remains in the high purity mode while the aircraft 2 is cruising. When the aircraft begins approach and slow descent, the controller 48 switches the inerting system 22 to the intermediate mode 110 by narrowing the throttle valve 42 on the vortex tube 24, increasing the amount of NEA produced but reducing its purity. In this mode the controller 48 dynamically maintains 104 the flow rate of NEA and the purity of the NEA at their new respective target levels, as well as dynamically maintaining 106 the pressure of the air in the inlet flow path 60 and continuing to monitor the performance 108 of the inerting system 22.

When the aircraft 2 begins normal descent, the controller 48 switches the inerting system 22 to the high flow mode 112 by further narrowing the throttle valve 42 on the vortex tube 24, further increasing the amount of NEA produced at the expense of further reduced purity. The controller 48 then dynamically maintains 104 the flow rate of NEA and the purity of the NEA at their new respective target levels, as well as dynamically maintaining 106 the pressure of the air in the inlet flow path 60 and continuing to monitor the performance 108 of the inerting system 22.

In all modes, while monitoring the performance of the inerting system 22 if the controller 48 detects that the performance has become non-optimal by virtue of flow through the vortex tube 24 becoming slower, it triggers 114 the maintenance operation and warms the vortex tube 24 as discussed above. Equally, the controller 48 shuts down 116 the inerting system 22 if it detects a fault such as a leak or the vortex tube remaining clogged after heating. Further, if the controller detects a gradual decrease in the air flow through the vortex tube 24 it predicts 118 when the vortex tube 24 will become clogged and provides an alert that action should be taken before then. Instead or as well, if the controller 48 detects a gradual decrease in flow rate provided by the compressor 74 it will predict 118 when performance will drop below an acceptable level and provide an alert to that effect.

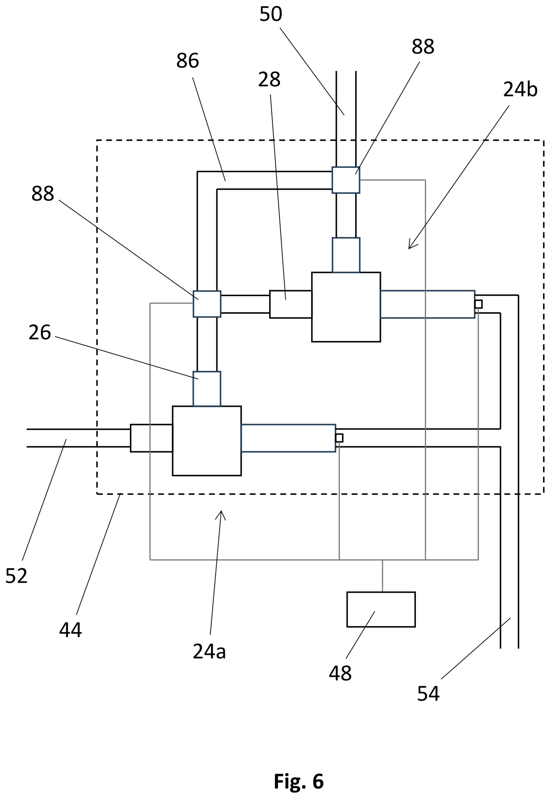

An inerting apparatus of an aircraft according to a second embodiment of the invention is shown in Figure 6, which will now be referred to in combination with Figures 1 to 5. The second embodiment is similar to the first embodiment, therefore only the differences will be described here.

Whereas the inerting apparatus 44 of the first embodiment had a single the vortex tube 24, in the second embodiment the inerting apparatus 44 has a pair of vortex tubes 24a, 24b connected in series - the inlet 26 of the second vortex tube 24b is connected to the NEA outlet 28 of the first vortex tube 24a. The first vortex tube 24a separates the inlet air flow into partially nitrogen enriched air and one stream of OEA. The second vortex tube 24b separates the partially nitrogen enriched air into NEA and another stream of OEA. The NEA is fed to the enclosures 14, 16, 18, 20 as described above. The two streams of OEA are mixed together and ejected overboard from the aircraft 2 as also discussed above.

The inerting apparatus 44 also has a bypass passage 86 which extends between two bypass valves 88. The controller 48 is operably connected to the bypass valves 88 and can control them to direct the inlet air flow directly to the second vortex tube 24b, bypassing the first vortex tube 24a. If the controller 48 detects a blockage which cannot be cleared by heating, rather than shutting down the entire inerting system 22 it opens the bypass valves 88 to bypass the first vortex tube 24a (which, being upstream, is likely to be where the blockage is located).

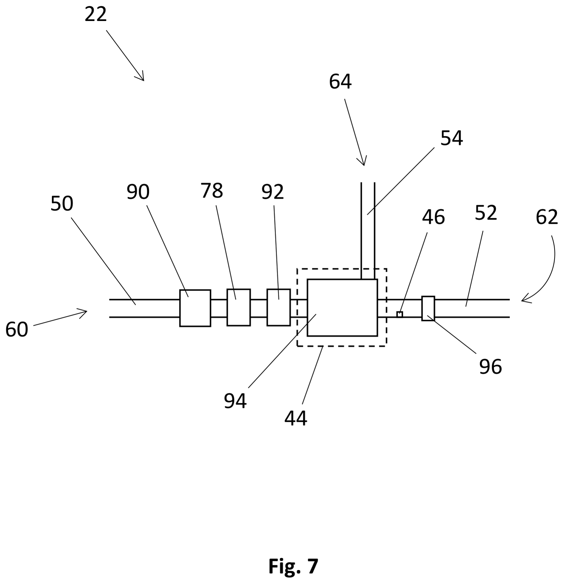

An inerting system of an aircraft according to a third embodiment of the invention is shown in Figure 7, which will now be referred to in combination with Figures 1 to 6. The third embodiment is similar to the first embodiment, therefore only the differences will be described here.

In the present embodiment the inlet duct 50 runs from a bleed channel (not visible) from one of the engines 12. The inlet duct 50 passes through a heat exchanger 90, a filter 78 as per the first embodiment, and an ozone converter 92. Further, in the present embodiment the inerting apparatus 44 takes the form of an ASM 94 rather than a vortex tube. The heat exchanger 90 cools the inlet air flow to prevent the risk of hot air from the engine 12 damaging the membrane of the ASM, and the ozone converter 92 converts ozone (which would be too large to pass through the membrane) into oxygen.

Like the first embodiment, inside the NEA duct 52 is an oxygen concentration sensor 46 connected to a controller 48. However, the NEA duct 52 (and thus the NEA flow path 62) of this embodiment has a throttle valve 96.

In the present embodiment the controller 48 is only connected to the oxygen concentration sensor 46 and the throttle valve 96. Nonetheless, the controller 48 can adjust operation of the inerting system 22, based on feedback from the oxygen concentration sensor 46. By adjusting the flow rate of NEA through the NEA flow path 62 by narrowing or widening the throttle valve 96, the controller can control the flow rate of NEA. Equally, by adjusting the flow rate of NEA the controller 48 can adjust the amount of time that the inlet air flow spends in the ASM, thereby controlling the amount of time oxygen has to move through the membrane and thus controlling the purity of the NEA produced. Accordingly, despite being able to access much less data the controller 48 is nonetheless configured to dynamically maintain the flow rate and purity of the NEA at the desired levels.

Furthermore, the controller 48 logs the oxygen concentration readings provided by the oxygen concentration sensor 46 so as to monitor the performance of the inerting system 22 over time. Based on a gradual reduction in purity of NEA (at a given position of the throttle valve 96), the controller 48 is able to predict when the membrane of the ASM 94 will reach the point at which it will qualify as being faulty and need replacing. If the ASM becomes too degraded as the controller 48 is monitoring the inerting system 22, the controller 48 will shut down the inerting system 22 by fully closing the throttle valve 96.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An inerting system comprising:
an inerting apparatus configured to receive an inlet air flow and separate it into nitrogen enriched air (NEA) and oxygen enriched air (OEA);
an inlet flow path configured to convey the inlet air flow, an NEA flow path configured to convey the NEA, and an OEA flow path configured to convey the OEA;
an oxygen concentration sensor positioned in one of said flow paths; and
a controller connected to the oxygen concentration sensor, the controller being configured to adjust operation of the inerting system during use based at least in part on feedback received from the oxygen concentration sensor.

2. An inerting system according to claim 1 wherein:
the inerting apparatus comprises a vortex tube, and/or
the inerting system further comprises a throttle valve, wherein the controller is configured to adjust the operation of the inerting system by adjusting the throttle valve.

3. An inerting system according to any preceding claim wherein the controller is configured to adjust operation of the inerting system so as to maintain a target flow rate and/or a target oxygen concentration of NEA, wherein optionally:
the controller is further configured to switch between different operation modes of the inerting system;
the different operation modes have different target flow rates and/or target oxygen concentrations of NEA; and
in each operation mode, the controller is configured to adjust operation of the inerting system so as to maintain the associated target flow rate and/or target oxygen concentration of NEA.

4. An inerting system according to any preceding claim wherein the inerting system further comprises a flow rate sensor, a pressure sensor and/or a temperature sensor, the or each sensor being connected to the controller.

5. An inerting system according to any preceding claim wherein the controller is further configured to monitor the performance of the inerting system over time, and optionally wherein the controller is configured to trigger a maintenance operation if the performance of the inerting system becomes non-optimal.

6. An inerting system according to claim 5 wherein the controller is further configured to shut down or bypass a part or all of the inerting apparatus upon detection of a fault in the performance of the inerting system, and/or wherein the controller is further configured to predict a future fault based on an observed gradual change in the monitored performance of the inerting system.

7. An inerting system according to any preceding claim wherein the inerting system is an aircraft enclosure inerting system.

8. An aircraft comprising an aircraft enclosure inerting system according to claim 7.

9. A method of controlling an inerting system, the method comprising:
conveying an inlet air flow to an inerting apparatus along an inlet flow path;
using the inerting apparatus to separate the inlet air flow into nitrogen enriched air (NEA) and oxygen enriched air (OEA);
conveying the NEA away from the inerting apparatus along an NEA flow path and conveying the OEA away from the inerting apparatus along an OEA flow path; and
adjusting operation of the inerting system during use based at least in part on feedback received from an oxygen concentration sensor.

10. A method according to claim 9 wherein the separating the inlet air flow comprises centrifugally separating air using a vortex tube of the inerting apparatus, and/or wherein adjusting operation of the inerting system comprises adjusting a flow rate of air in the inerting system.

11. A method according to claim 9 or 10 wherein adjusting operation of the inerting system comprises dynamically maintaining a target flow rate and/or a target oxygen concentration of the NEA conveyed along the NEA flow path, wherein optionally the method comprises switching the inerting system between different operation modes, and maintaining a different target flow rate and/or a target oxygen concentration in each mode.

12. A method according to any one of claims 9 to 11 further comprising measuring a flow rate and/or a pressure level and/or a temperature in the inerting system.

13. A method according to any one of claims 9 to 12 further comprising monitoring performance of the inerting system over time, and optionally further comprising triggering a maintenance operation if performance of the inerting system becomes non-optimal.

14. A method according to claim 13 further comprising shutting down or bypassing part or all of the inerting apparatus upon detection of a fault in the performance of the inerting system, and/or predicting a future fault based on an observed gradual change in the monitored performance of the inerting system.

15. A method according to any one of claims 9 to 14 wherein the method is a method of controlling an aircraft enclosure inerting system, and/or the method uses the apparatus of any one of claims 1 to 8.
